# EUROPÄISCHE PATENTANMELDUNG

(11) **EP 2 372 543 A1**
(43) Veröffentlichungstag der Anmeldung: **05.10.2011**
(21) Anmeldenummer: 10157251.9
(22) Anmeldetag: 22.03.2010
(51) Int. Cl.: G06F 9/46

(54) **Verfahren und Vorrichtung zur Übertragung von Daten zum Rendern einer mehrdimensionalen Animation**

(71) Anmelder: Huchtemann, Ralph, 50670 Köln (DE); Konnopasch, André, 50823 Köln (DE)
(72) Erfinder: Huchtemann, Dipl.-Ing. Ralph, 50670, Köln (DE); Konnopasch, André, 50823, Köln (DE)
(74) Vertreter: Freischem, Stephan

(57) **Zusammenfassung**

Verfahren zur Übergabe von Projektdaten einer mehrdimensionalen Animation von einem ersten Rechner an einen über ein Netzwerk verbundenen zweiten Rechner, der mindestens eine Render-Vorrichtung (Renderfarm) aufweist, deren benötigte Informationen durch ein Regelwerk bestimmt werden, umfassend folgende Schritte:
- Herunterladen eines Plug-Ins (Farminizer Plugin) auf den ersten Rechner und Einbinden in eine Animationssoftware, die auf dem ersten Rechner installiert ist,
- Sammeln von Informationen auf dem ersten Rechner durch das Plug-In, die in Bezug stehen zu den Projektdaten und/oder der Render-Vorrichtung;
- Überprüfen der gesammelten Informationen anhand eines Regelwerkes, und falls alle Regeln erfüllt wurden, werden die gesammelten Informationen und die Projektdaten an den zweiten Rechner übermittelt, sollten die Regeln nicht erfüllt werden, so wird eine Meldung ausgegeben oder
es wird eine Anpassung der Projektdaten vollautomatisch und/oder teilautomatisch mit interaktiver Führung durchgeführt, um dann die gesammelten Informationen und die Projektdaten an den zweiten Rechner zu übermitteln;
- Automatische Einstellung der Render-Vorrichtung auf der Basis der Informationen und der Projektdaten und Durchführen des Renderns.

## Beschreibung

Die Erfindung betrifft ein Verfahren und eine Vorrichtung zur kontrollierten Übertragung und Aufbereitung von Daten zum Rendern einer mehrdimensionalen Animation, auf einem Server der durch einen Dienstleister bereitgestellt wird.

### Beschreibung

Es ist bekannt und üblich, dass Projektdaten einer 3D Animation an einen Dienstleister (Renderfarm) zu einem Rendering übergeben werden können. Der Begriff Rendern (Engl. to render) bezeichnet die Erstellung einer Grafik aus einer Skizze oder einem Modell. Bei dieser Umsetzung erfolgt eine Modellierung natürlicher Phänomene wie Textur, Refraktion, Reflexion, Schatten etc., so dass dem Betrachter ein Eindruck der Materialität, der Größe und Form vermittelt wird.
Dieser Vorgang wird vermehrt per Computergrafik mit entsprechender Software durchgeführt. Hierzu werden aus 3D-Modellen oftmals Bilder für kurze Filmsequenzen oder für aufwendige Grafiken erzeugt.
Je komplexer das Modell und je mehr Bilder benötigt werden, desto mehr Rechenleistung ist notwendig, um jedes Modell zu rendern. Diese Rechenleistung wird oftmals von einem Dienstleister bei Bedarf zugekauft, da der Anwender oft nicht über die notwendige Rechenleistung verfügt, und deshalb seine abschließende Projektdatei von einer Renderfarm mit speziell eingerichtetem Rechenzentrum gegen Entgelt verarbeiten lässt.

Hierfür speichert der Anwender seine Projektdaten innerhalb seiner Anwendung ab, sammelt die zusätzlichen Sekundärdaten (Texturen, maps, etc) und lädt die Daten über ein Browser Interface zum Anbieter hoch. Im Browser findet der Anwender Möglichkeiten den Renderprozess zu starten, Abzurechnen und die Ergebnisse des Renderings lokal herunterzuladen.

Problematisch hierbei ist, dass der oben beschriebene Prozess zeitaufwändig und fehlerbehaftet ist. Zum einen ist die gesamte Vorbereitung des Renderings vom Anwender manuell durchzuführen, andererseits treten durch die unterschiedliche Konfiguration von lokalem Arbeitsplatz und 3D Applikation des Anwenders sowie Konfiguration der Rechner der Renderfarm meistens Fehler auf.

Es gibt in der Grundkonfiguration einer 3D-Applikation Parameter, welche durch ein einfaches Abspeichern der Projektdatei nicht Datei-immanent festgehalten werden. Zusätzliche und übliche Modifizierungen der 3D Applikation durch den Anwender mittels weiterer Plugins, Renderengines, Versionsnummern, etc. werden ebenfalls nicht abgespeichert.

### Überblick über die Erfindung:

Diese und weitere im Folgenden beschriebene Probleme werden durch die im Patentanspruch aufgeführten Merkmale gelöst.

Im Einzelnen handelt es sich um ein Verfahren zur Übergabe von Projektdaten einer mehrdimensionalen Animation (vorzugsweise 3D Animation) von einem ersten Rechner an einen über ein Netzwerk verbunden zweiten Rechner, der mindestens eine Render-Vorrichtung aufweist. In der bevorzugten Ausführungsform handelt es sich um eine Renderfarm bestehend aus einer Vielzahl von Rechnern, die zentral gesteuert werden, und die über das Internet zugänglich sind. Die von der Renderfarm benötigten Informationen werden durch ein Regelwerk bestimmt.
Das Verfahren umfasst folgende Schritte. Nach dem ein Benutzer die Web-Seite des Anbieters der Renderfarm betreten hat kann er ein Plug-In (Farminizer Plugin) herunterladen und auf seinem Rechner (erster Rechner) in die, auf dem Rechner installierte, Animationssoftware einbinden.
Die Plug-In-Software sammelt Informationen auf dem ersten Rechner, die in Bezug stehen zu den Projektdaten und/oder der Render-Vorrichtung. Eine Überprüfung der gesammelten Informationen erfolgt anhand eines Regelwerkes, wie es weiter unten beschrieben wird. Falls alle Regeln erfüllt wurden, werden die gesammelten Informationen und die Projektdaten an die Renderfarm unmittelbar oder mittelbar übermittelt, sollten die Regeln nicht erfüllt werden, wird eine Meldung ausgegeben oder es wird eine Anpassung der Projektdaten voll automatisch und/oder teilautomatisch mit interaktiver Führung durchgeführt, um dann die gesammelten Informationen und die Projektdaten an den zweiten Rechner zu übermitteln.
Nachdem diese Daten von der Renderfarm erlangt wurden, erfolgt eine automatische Einstellung der Render-Vorrichtung auf der Basis der Informationen und der Projektdaten und ein Durchführen des Renderns erfolgt.

Weitere Teile der Erfindung sind Vorrichtungen die das Verfahren durchführen.

Die durch die Erfindung erzielten Vorteile bestehen insbesondere darin, dass die Aufhebung von Inkompatibilitäten innerhalb der 3D Applikation vollzogen wird. D.h. dort wo eine Anpassung und automatische Modifizierung des Projektes überhaupt möglich ist.

Das Sammeln projektspezifischer, aber nicht Projektdateiimmanenter Daten passt die Renderfarm zusätzlich an das Projekt an.

Der Prozess startet innerhalb der 3D Anwendung, welche der Anwender hierfür nicht verlassen muss.

Die Software lädt im Hintergrund die Ergebnisse der Berechnung herunter und speichert sie an der in der Projektdatei angegebenen Stelle lokal ab. Der Anwender erfährt demnach durch die Automatisierung einen erhöhten Komfort.

Der gesamte Prozess zur ferngesteuerten Berechnung einer 3D Animation auf einer Renderfarm, Hochladen, Herunterladen und lokalem Ablegen an gewünschter Stelle wird durch einen einzigen Klick ausgelöst. Der Prozess ist vergleichbar zu einem lokalen Rendering auf dem Rechner des Anwenders.

Aufgrund der Komplexität dieser Applikationen ergeben sich zahlreiche Fehlerquellen die eine Berechnung unmöglich machen oder zu fehlerhaften Ergebnissen führen. Desweiteren ist die Menge an benötigten Dateien häufig unüberschaubar, da sich diese meist an unterschiedlichen Stellen auf dem Anwender-PC befinden sowie oftmals im lokalen Netzwerk des Anwenders verteilt sind.

### Funktionsweise der Farminizer-Software

Der Anwender (in Folge A) bezieht beim Dienstleister (in Folge B) ein Software-Paket bestehend aus dem "Manager" und den "Farminizer"-Plugins für alle 3D-Applikationen. Der Manager fungiert hierbei als zentrale Sammelstelle und Verwaltung aller lokalen Projekte von A und dient zur Übersicht über den aktuellen Fortschritt bereits übermittelter Projekte, zur Installation der Farminizer-Plugins sowie zum Übertragen der Projekte an die Renderfarm und dem Empfang der berechneten Dateien.

Aufgabe der Farminizer-Plugins ist es, in der jeweiligen 3D-Applikation sicher zu stellen, dass das jeweilige, zuvor erstellte Projekt von A den Rahmenbedingungen auf der Renderfarm genügt und fehlerfrei und vollständig berechnet werden kann. Hierzu werden eine Reihe technischer Prüfungen vorgenommen und schließlich einheitliche "Pakete" erstellt und exportiert, welche automatisch im Manager importiert und homogen von der Renderfarm verarbeitet werden können. Nach erfolgreicher Übergabe der Daten an den Manager wird der ursprüngliche Zustand der Daten wieder hergestellt, so dass A keine Änderung vorfindet.

### Detaillierter Ablauf der Plugins-Software

Bei der Installation des Plugins werden automatisch Menü-Einträge in der 3D-Applikation integriert, womit der Farminizer analog einem normalen Renderprozess gestartet werden kann. Im Anschluss werden verschiedene Tests ausgeführt, die das Projekt auf mögliche Probleme im Bezug auf die Berechnung auf der Renderfarm untersuchen. Diese Tests gliedern sich grob in fünf Teilbereiche:

### Allgemeine Prüfungen

Diese beinhalten Analysen bezüglich des verwendeten Anwendersystems sowie ob generelle Anforderungen an eine Szene, welche zur Berechnung benötigt werden, gegeben sind:
- Ist die eigene Plugin-Version mit dem Manager kompatibel bzw. aktuell?
- Sind ausreichende Rechte des angemeldeten Benutzers vorhanden?
- Sind benötigte Dateizugriffe möglich?
- Enthält die Szene dynamische Verlinkungen zu anderen Szenen (z. B. XRefs)
- Enthält die Szene mindestens eine Lichtquelle?
- Enthält die Szene animierte Texturen?

Die Ergebnisse dieser Analysen werden protokolliert und dem Benutzer (ähnlich einer Fehlermeldung) angezeigt. Es kann vorzugsweise nur dann fortgefahren werden, wenn o.g. Prüfungen erfolgreich verlaufen. Die Fehler zu beheben obliegt oftmals dem Benutzer, da selbstverständlich die Plugin-Software keine Möglichkeit besitzt, Administratorenrechte etc. systemweit zu erwirken.

Darüber hinaus werden "Meta-Informationen" über die Szene gesammelt, welche von der Renderfarm entsprechend interpretiert werden können. Diese werden ohne Benutzerinteraktion automatisch in eine Konfigurationsdatei geschrieben und an den Manager übermittelt. Die Metadaten enthalten u.a.:
- Version und Erweiterungen (z. B. Service-Packs) der 3D-Applikation sowie des verwendeten Renderers
- Einheiten und Bemaßung der 3D-Application
- Zugrundeliegende Plattform (Windows, Mac, 32bit oder 64bit-Architektur) und Version
- Einheiten-Kontext (z. B. Dezimalpunkt oder -komma)?
- Verwendete Kameras

### Überprüfung der Render-Einstellungen

Hierunter fallen allgemeine Prüfungen hinsichtlich der Render-Einstellungen, welche unabhängig von spezifischen Render-Engines sind:
- Befindet sich die zu rendernde Auflösung außerhalb der gegebenen Grenzen?
- Welche Gamma Werte der 3D-Application sind gegeben?
- Welche Frames sollen gerendert werden? Gibt es Abschnitte oder Sprünge?
- Werden Pre-Render-Scripts ausgeführt?
- Werden Post-Render-Effekte verwendet?
- Wurden Framebuffer definiert, welche Einstellungen haben diese und ist mindestens einer für das Rendering aktiviert?
- Liegen ungültige Kamera-Einstellungen vor (wie z.B. "tiled")?
- Ist ein nicht-unterstützter Renderer aktiviert?
- In welchem Format soll das Ergebnis ausgegeben werden, wie soll es benannt werden und sind diese Angaben gültig bzw. werden diese von der Renderfarm unterstützt?

Auch hier werden ungültige Prüfresultate dem Benutzer angezeigt, so dass dieser die entsprechenden Parameter in der Szene korrigieren kann.

Ein Sonderfall ist die Prüfung ob ein Einzelbild oder eine Animation gerendert werden soll. Diese erfolgt automatisch anhand der vom Benutzer eingestellten Frame-Anzahl. Umfasst diese lediglich ein Frame so wird eine Benutzerabfrage generiert ob dieses eine Frame auf der Renderfarm verteilt gerendert werden soll (distributed single frame job). Wird dies mit "ja" beantwortet, so werden weitere, Single-Frame spezifische Prüfungen durchgeführt: die Auflösung sollte in einer möglichen Ausführungsform 400 x 400 Pixel übersteigen und zudem durch den Faktor 10 restlos teilbar sein. Anschließend protokolliert das Plugin in der Konfigurationsdatei ob ein Single-Frame Job gerendert werden soll.

### Überprüfung von Texturen / maps

Ein bedeutender Teil des Plugins ist das Sammeln aller externer Texturen und sonstiger Dateien, welche in Abhängigkeit zum Anwenderprojekt stehen, so dass diese beim Berechnen auf der Renderfarm vorliegen:
- Alle verwendeten Texturen finden
- Alle sonstigen Abhängigkeiten zu externen Dateien ermitteln, diese umfassen u.a. VRay Dateien, mental ray Dateien, Global Illumination files, photon maps, Irradiance maps, Final Gather maps, Ifl Dateien, Pointcaches, Simulationscaches, Particle Caches, Hair caches etc.
- Sind alle diese abhängigen Dateien zum Export-Zeitpunkt vorhanden und lesbar? Wenn nein, werden dem Benutzer alle problematischen Datei-Bezüge angezeigt, so dass dieser entweder die Referenz zur Datei in der Szene entfernen oder aber die Datei an entsprechender Stelle zur Verfügung stellen kann. Ein Export ist nur dann möglich wenn alle Bezüge fehlerfrei vorhanden sind.
- Sind alle Dateinamen konform mit den Anforderungen der Farm? (Dies heißt insbesondere frei von Sonderzeichen und Leerstellen) Wenn dies nicht der Fall ist, werden alle invaliden Dateien automatisch einer eigenen Notation entsprechend umbenannt und neu verlinkt. Die Korrektur ist automatisiert - hier findet also keine Benutzerinteraktion statt.
- Hat der Anwender bereits eine oder mehrere der verwendeten Dateien mit einem anderen Projekt auf die Renderfarm geladen? Diese Prüfung erfolgt "live" im Plugin: es wird ein Signal zum Manager gesendet, welcher eine Liste der aktuell auf dem FTP-Server der Renderfarm vorhandenen Dateien des Users bereitstellt. Diese wird dann mit den verwendeten Dateien der Szene im Plugin abgeglichen. Sind identische Dateien vorhanden, wird nur der Bezug zu dieser Datei (einem Link entsprechend) vermerkt, nicht jedoch die Datei selbst kopiert. So kann ein Anwender auf der Farm einen "Datei-Pool" vorhalten und bereits vorhandene Dateien müssen nicht erneut hochgeladen werden. Zum Datei-Abgleich wird hierbei das md5-Prüfsummenverfahren angewendet, um eine vollständige Identität sicherzustellen.

### Prüfungen spezifischer Renderer

Jede Render-Engine enthält spezifische Einstellungen und Parameter, welche entsprechend getrennt analysiert werden müssen. Vom Farminizer unterstützte Renderer (nicht-proprietäre Renderer der 3D-Applikation) sind momentan z.B. mental ray, VRay, final render, Maxwell. Die Prüfungen betreffen u.a. die Version des Renderers, verwendete Zusätze, Global-Illumination Modi, Sampling, Gamma-Korrektur, etc.

### Prüfung von Abhängigkeiten zu Plugins oder benutzerdefinierter Shader

Häufig werden 3D-Applikationen vom Anwender durch Verwendung externer Aufsätze (etwa Plugins oder Custom shader) erweitert. Betreffen diese den Renderprozess oder das Ergebnis bei der Berechnung, so ist ein korrektes Ergebnis nur dann gegeben, wenn die Renderfarm dieselben Plugins bzw. dieselben Versionen dieser aufweist. Auf dem Renderfarm-Server befindet sich für jede 3D-Applikation und jede Plattform und Version dieser eine "Whitelist", d.h. eine Auflistung aller installierten Erweiterungen. Das Farminizer-Plug-In verbindet sich automatisch mit dem Server und prüft ob eine neue Version dieser Whitelist vorliegt. Ist dies der Fall, wird der lokale Datenbestand automatisch aktualisiert. Prüfungen sind u.a.:
- Sind beim Anwender lokale Erweiterungen installiert, welche nicht auf der Renderfarm vorhanden sind?
- Verwendet die Szene nicht-proprietäre Plug-In oder Shader?
- Werden Materialien in der Szene verwendet, welche auf nicht-proprietäre Shader zurückgreifen?

Wenn alle Prüfungen erfolgreich verlaufen sind, kann das Projekt direkt exportiert werden. Ist dies nicht der Fall, so wird dem Benutzer ein Bericht angezeigt, welcher Auskunft über kritische Situationen gibt und bei unplausiblen Eingaben entsprechende Hinweise erstellt. Hier finden sich Kurzanleitungen, wie die den Fehlern beizukommen ist. Der Farminizer kann hierbei geöffnet bleiben, der Anwender kann "live" Änderungen am Projekt vornehmen und im Anschluss die Prüfung beliebig oft neu starten.

### Export:

Die Export-Routine verpackt das Anwenderprojekt in eine homogene, für Manager und Renderfarm lesbare Struktur und setzt automatisch für die Renderfarm nötige Szenen- bzw. Renderer-Parameter. Ein Projekt kann nur exportiert werden, wenn alle Prüfungen fehlerfrei passiert wurden - somit werden Benutzerfehler und inkompatible Projekte noch vor dem Weg zur Renderfarm erkannt und können direkt vor Ort in der 3D-Applikation korrigiert werden.

Vor dem Export werden alle benötigten Dateien automatisch in eine spezifische eigene Ordnerstruktur lokal beim Anwender kopiert und im Projekt entsprechend neu verlinkt. So sind nach dem Export keine Abhängigkeiten externer Dateien außerhalb des Farminizer-eigenen Verzeichnisses vorhanden, wodurch vermieden wird, dass zum Zeitpunkt des Übertragens an die Renderfarm benötigte Resourcen fehlen. Ebenso werden damit zuvor verwendete absolute Pfadangaben von A, welche natürlich auf der Renderfarm nicht vorhanden sind, entfernt und entsprechend den Gegebenheiten auf dem Server angepasst.

Das Farminizer-Plugin erstellt eine Config-Datei, welche Meta-Daten zum Projekt enthält. Hier werden alle Projektinformationen protokolliert, wie etwa welche Frames zu rendern sind, in welcher 3D-Applikation das Projekt erstellt wurde, welche Render-Engine verwendet werden soll. Von grosser Bedeutung ist hierbei die Auflistung aller externer Abhängigkeiten wie Texturen oder andere Dateien inklusive deren Prüfsumme. So können Upload-Fehler und unvollständige Projekte erkannt werden, noch bevor Rechenaufwand seitens der Renderfarm beansprucht wird.

Im Anschluss wird das Gesamtpaket, bestehend aus den Projektdateien, der Config-Datei und aller externen Texturen und anderen Dateien zum Manager zur Weiterverarbeitung geschrieben. Das Paket selbst wird verschlüsselt, so dass keine weiteren Änderungen am exportierten Projekt vorgenommen werden können. Der Manager erhält eine Nachricht und startet bzw. aktualisiert sich daraufhin und importiert das neue Projektpaket selbständig.

Die finale Aufgabe des Farminizer-Plugins besteht darin, den Ausgangs-Zustand des Anwenderprojektes wieder herzustellen. Dies ist nötig, damit die Szene lokal auf dem Anwender-PC selbst fehlerfrei rendern kann und keine farmspezifischen Änderungen persistent gespeichert werden. Dies geschieht je nach 3D-Applikation entweder durch Rückgängig-Machen vorgenommener Änderungen oder durch Verwerfen der modifizierten Szene und Neu-Laden der Ursprungsdatei.

### Figurenbeschreibung:

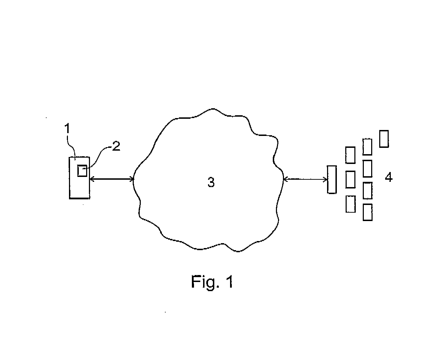

Im Folgenden werden die Figuren beschrieben. Es zeigt Fig. 1 einen schematischen Aufbau der Erfindung mit einem ersten Rechner und der Renderfarm;

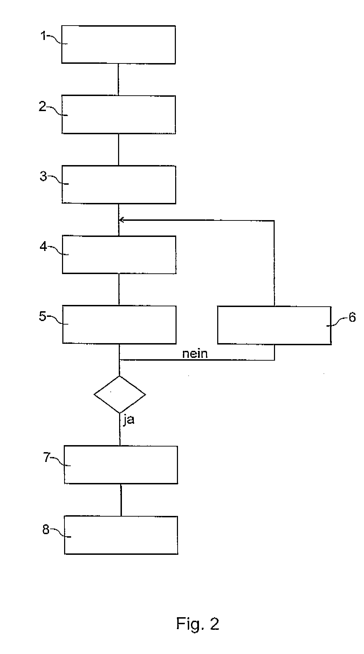

Fig. 2 zeigt einen Ablauf des Verfahrens gemäß den Ansprüchen.

Die Fig. 1 zeigt den grundsätzlichen Aufbau des Systems. Auf einem ersten Rechner 1 ist das Plugin 2 installiert. Über das Netzwerk 3 (Internet) besteht eine Verbindung zur Renderfarm 4.

Die Fig. 2 zeigt den schematischen Ablauf des Verfahrens. In einem Schritt 1 erfolgt ein Herunterladen des Plugins. Dann erfolgt die Installation des Plugins 2. In Schritt 3 erfolgt ein Aufruf des Plugins durch die Anwendung. Dieses sammelt in Schritt 4 Informationen. Die so gesammelten Informationen werden in Schritt 5 durch das Plugin überprüft, mit dem Regelwerk verglichen und ggf. angepasst, soweit dies möglich ist.
Falls nicht alle Regeln erfüllt sind, erfolgt ein Hinweis 6 an den Benutzer, der die Daten dann modifizieren kann, um die Prüfung erneut durchzuführen.

In Schritt 7 erfolgt ein Übertragen der Informationen und der Projektdaten durch das Plugin über ein Netzwerk verbunden an den zweiten Rechner, der mindestens eine Render-Vorrichtung (Renderfarm) aufweist, deren benötigte Informationen durch das Regelwerk bestimmt werden. Dann erfolgt die automatische Einstellung der Render-Vorrichtung auf der Basis der Informationen und der Projektdaten und schließlich das Rendern in Schritt 8.

## Patentansprüche

1. Verfahren zur Übergabe von Projektdaten einer mehrdimensionalen Animation von einem ersten Rechner an einen über ein Netzwerk verbundenen zweiten Rechner, der mindestens eine Render-Vorrichtung (Renderfarm) aufweist, deren benötigte Informationen durch ein Regelwerk bestimmt werden,
umfassend folgende Schritte:
- Herunterladen eines Plug-Ins (Farminizer Plugin) auf den ersten Rechner und Einbinden in eine Animationssoftware, die auf dem ersten Rechner installiert ist,
- Sammeln von Informationen auf dem ersten Rechner durch das Plug-In, die in Bezug stehen zu den Projektdaten und/oder der Render-Vorrichtung;
- Überprüfen der gesammelten Informationen anhand eines Regelwerkes, und falls alle Regeln erfüllt wurden, werden die gesammelte Informationen und die Projektdaten an den zweiten Rechner übermittelt, sollten die Regeln nicht erfüllt werden, so wird eine Meldung ausgegeben oder
es wird eine Anpassung der Projektdaten voll automatisch und/oder teilautomatisch mit interaktiver Führung durchgeführt, um dann die gesammelten Informationen und die Projektdaten an den zweiten Rechner zu übermitteln;
- Automatische Einstellung der Render-Vorrichtung auf der Basis der Informationen und der Projektdaten und Durchführen des Renderns.

2. Das Verfahren nach dem vorhergehenden Anspruch, wobei das Plug-In in 3D Applikationen wie Autodesk Maya, Autodesk 3D Studio MAX, Maxon CINEMA 4D, Autodesk Softimage, Newtek Lightwave, Blender Foundation Blender, Luxology Modo, Autodesk Revit, Rhinoceros 3D, Planetside Terragen, Nextlimit Maxwell, Eon Vue , Autodesk Mudbox, Pixologic Z-brush, Smith Micro Poser, Abvent Artlantis eingebunden wird.

3. Das Verfahren nach einem oder mehreren der vorhergehenden Ansprüche, wobei das Regelwerk beim Starten des Plug-Ins auf Aktualität überprüft wird und falls ein neueres Regelwerk vorliegt, ein Herunterladen des neuen Regelwerks erfolgt.

4. Das Verfahren nach einem oder mehreren der vorhergehenden Ansprüche, wobei eine Konfiguration des Rendersystems anhand der Projektdaten und gesammelten Informationen automatisch erfolgt.

5. Das Verfahren nach einem oder mehreren der vorhergehenden Ansprüche, wobei Inkompatibilitäten zwischen der Animationssoftware und der Rendervorrichtung anhand des Regelwerks erkannt und/oder behoben werden, indem sowohl die Projektdatei vor dem Rendering geändert wird, als auch die Konfiguration der Rendervorrichtung.

6. Das Verfahren nach einem oder mehreren der vorhergehenden Ansprüche, wobei dass Rendern der Projektdaten durch die Rendervorrichtung ohne weiteres Zutun des Anwenders und mit vorzugsweise nur einem Tastendruck (One-Click) durchgeführt wird und die Ergebnisse des Renderings automatisch auf dem ersten Rechner abgelegt wird
und/oder wobei nach erfolgreicher Übergabe der Daten der ursprüngliche Zustand der Daten wieder hergestellt, so auf dem ersten Rechner keine Änderung vorliegen, wobei dies vorzugsweise durch Rückgängig-Machen von vorgenommener Änderungen und/oder durch Verwerfen von der modifizierten Daten und Neu-Laden der Ursprungsdaten erfolgt.

7. Das Verfahren nach einem oder mehreren der vorhergehenden Ansprüche, wobei bei der Installation des Plugins automatisch Menü-Einträge in der Animationsapplikation integriert werden, womit das entfernte Rendern analog einem normalen Renderprozess gestartet wird.

8. Das Verfahren nach einem oder mehreren der vorhergehenden Ansprüche, wobei eine allgemeine Prüfung erfolgt, indem eine oder mehrere der folgenden Kriterien überprüft wird:
- sind ausreichende Zugriffsrechte des angemeldeten Benutzers auf dem ersten Rechner vorhanden,
- sind benötigte Dateizugriffe auf dem Rechner vorhanden,
- Enthält die Szene dynamische Verlinkungen zu anderen Szenen,
- Enthält die Szene mindestens eine Lichtquelle
- Enthält die Szene animierte Texturen.

9. Das Verfahren nach einem oder mehreren der vorhergehenden Ansprüche, wobei Meta-Informationen über die Projektdaten gesammelt werden, welche von dem Rendersystem entsprechend interpretiert werden können, wobei die Meta-Informationen eine oder mehrere der folgenden ist:
- Version und/oder Erweiterungen der Animationssoftware sowie des verwendeten Renderers und dessen Gamma-Werte
- Zugrundeliegende Betriebssystemplattform des ersten Rechners,
- Einheiten, Bemaßung und deren Kontext,
- Verwendete Kameras.

10. Das Verfahren nach einem oder mehreren der vorhergehenden Ansprüche, wobei eine Überprüfung der Render-Einstellungen erfolgt, mit einem oder mehreren der folgenden Kriterien:
- Befindet sich die zu rendernde Auflösung außerhalb von gegeben Grenzen;
- Welche Frames sollen gerendert werden
- Gibt es Abschnitte oder Sprünge
- Werden Pre-Render-Scripts ausgeführt
- Werden Post-Render-Effekte verwendet
- Wurden Framebuffer definiert und/oder welche Einstellungen haben diese und ist mindestens einer für das Rendering aktiviert;
- Liegen ungültige Kamera-Einstellungen vor,
- Ist ein nicht-unterstützter Renderer aktiviert,
- In welchem Format soll das Ergebnis ausgegeben werden, wie soll es benannt werden und werden diese von dem Render-System unterstützt.

11. Das Verfahren nach einem oder mehreren der vorhergehenden Ansprüche, wobei eine Prüfung ob ein Einzelbild oder eine Animation gerendert werden soll erfolgt, wobei dies automatisch anhand der vom Benutzer eingestellten Frame-Anzahl erfolgt und wobei vorzugsweise bei lediglich einem Frame eine Benutzerabfrage generiert wird, die den Benutzer fragt, ob dieses ein Frame auf dem Rendersystem verteilt gerendert werden soll.

12. Das Verfahren nach einem oder mehreren der vorhergehenden Ansprüche, wobei Abhängigkeiten zu externen Dateien und Daten ermittelt werden, um zu prüfen, ob diese Dateien zum Export-Zeitpunkt vorhanden und lesbar sind, wobei diese Daten Texturen sind und/oder VRay Dateien, mental ray Dateien, Global Illumination files, photon maps, Irradiance maps, Final Gather maps, Ifl Dateien, Pointcaches, Simulationscaches, Particle Caches, Hair caches, usw. und/oder wobei der Dateiname und der Dateiinhalt auf Kompatibilität überprüft wird, um falls notwendig automatisch Änderungen am Dateinamen und/oder der Verlinkung und/oder dem Inhalt vorzunehmen.

13. Das Verfahren nach einem der drei vorhergehenden Ansprüche, wobei überprüft wird, ob eine der Dateien, durch den Anwender bereits im Vorfeld in Verbindung mit anderen Projektdaten an den zweiten Rechner übertragen wurden, falls dies der Fall ist, wird lediglich ein Verweis erzeugt, und die Daten nicht erneut übertragen.

14. Das Verfahren nach einem der drei vorhergehenden Ansprüche, wobei überprüft wird, ob eine Abhängigkeiten zu Plugins oder benu-zerdefinierter Shadern in der Animationssoftware gegeben ist, um anhand des Regelwerks zu überprüfen, ob diese zulässig sind.

15. Rechner, zur Bereitstellung von Projektdaten einer Animationssoftware für ein Verfahren nach Anspruch 1 und einem oder mehreren der Unteransprüche, umfassend:
- Ein Ladegerät, ausgebildet und eingerichtet, um ein Plug-In (Farminizer Plugin) herunterzuladen und um dies in die Animationssoftware einzubinden, die auf dem ersten Rechner installiert ist, das Plug-In ist ausgebildet und eingerichtet, um Informationen zu sammeln, die in Bezug stehen zu den Projektdaten und/oder der Render-Vorrichtung;
- ein Gerät, ausgebildet und eingerichtet, zur Auswertung der gesammelten Informationen anhand eines Regelwerkes, und falls alle Regeln erfüllt wurden, werden die gesammelten Informationen und die Projektdaten für einen Versand vorbereitet, sollten die Regeln nicht erfüllt werden, so wird eine Meldung ausgegeben oder
es wird eine Anpassung der Projektdaten voll automatisch und/oder teilautomatisch mit interaktiver Führung durchgeführt, um dann die gesammelten Informationen und die Projektdaten für den Versand vorzubereiten;
- Übertragungsvorrichtung, die die gesammelten Projektdaten und die Informationen überträgt.

## Geänderte Patentansprüche

### Geänderte Patentansprüche gemäss Regel 137(2) EPÜ.

**1.** Verfahren zur Übertragung von Projektdaten einer mehrdimensionalen Animation von einem ersten Rechner an einen über ein Netzwerk verbundenen zweiten Rechner, der mindestens eine Rendervorrichtung (Renderfarm) aufweist,
umfassend folgende Schritte:
- Herunterladen eines Plug-Ins (Farminizer Plugin) auf den ersten Rechner und Einbinden in eine Animationssoftware, die auf dem ersten Rechner installiert ist,
- Sammeln von Informationen auf dem ersten Rechner durch das Plug-In, die in Bezug stehen zu den Projektdaten und/oder der Rendervorrichtung;
- Übermitteln der gesammelten Informationen an den zweiten Rechner;
**dadurch gekennzeichnet, dass** die von der Rendervorrichtung benötigten Informationen durch ein Regelwerk bestimmt werden, und dass das Verfahren ferner die folgenden Schritte umfasst:
- Überprüfen der gesammelten Informationen anhand des Regelwerkes, wobei falls alle Regeln erfüllt wurden, die gesammelten Informationen und die Projektdaten an den zweiten Rechner übermittelt werden, und wobei falls die Regeln nicht erfüllt worden sind, eine Meldung ausgegeben wird oder eine Anpassung der Projektdaten vollautomatisch und/oder teilautomatisch mit interaktiver Führung durchgeführt wird, um dann die gesammelten Informationen und die Projektdaten an den zweiten Rechner zu übermitteln;
- Automatische Einstellung der Rendervorrichtung auf der Basis der Informationen und der Projektdaten und Durchführen des Renderns.

**2.** Das Verfahren nach dem vorhergehenden Anspruch, wobei das Plug-In in 3D Applikationen wie Autodesk Maya, Autodesk 3D Studio MAX, Maxon CINEMA 40, Autodesk Softimage, Newtek Lightwave, Blender Foundation Blender, Luxology Modo, Autodesk Revit, Rhinoceros 3D, Planetside Terragen, Nextlimit Maxwell, Eon Vue , Autodesk Mudbox, Pixologic Z-brush, Smith Micro Poser, Abvent Artlantis eingebunden wird.

**3.** Das Verfahren nach einem oder mehreren der vorhergehenden Ansprüche, wobei das Regelwerk beim Starten des Plug-Ins auf Aktualität überprüft wird und falls ein neueres Regelwerk vorliegt, ein Herunterladen des neuen Regelwerks erfolgt.

**4.** Das Verfahren nach einem oder mehreren der vorhergehenden Ansprüche, wobei Inkompatibilitäten zwischen der Animationssoftware und der Rendervorrichtung anhand des Regelwerks erkannt und/oder behoben werden, indem sowohl die Projektdatei vor dem Rendering geändert wird, als auch die Konfiguration der Rendervorrichtung.

**5.** Das Verfahren nach einem oder mehreren der vorhergehenden Ansprüche, wobei dass Rendern der Projektdaten durch die Rendervorrichtung ohne weiteres Zutun des Anwenders und mit vorzugsweise nur einem Tastendruck (One-Click) durchgeführt wird und die Ergebnisse des Renderings automatisch auf dem ersten Rechner abgelegt wird
und/oder wobei nach erfolgreicher Übergabe der Daten der ursprüngliche Zustand der Daten wiederhergestellt, so auf dem ersten Rechner keine Änderung vorliegen, wobei dies vorzugsweise durch Rückgängigmachen von vorgenommener Änderungen und/oder durch Verwerfen von der modifizierten Daten und Neu-Laden der Ursprungsdaten erfolgt.

**6.** Das Verfahren nach einem oder mehreren der vorhergehenden Ansprüche, wobei bei der Installation des Plugins automatisch Menü-Einträge in der Animationsapplikation integriert werden, womit das entfernte Rendern analog einem normalen Renderprozess gestartet wird.

**7.** Das Verfahren nach einem oder mehreren der vorhergehenden Ansprüche, wobei eine allgemeine Prüfung erfolgt, indem eine oder mehrere der folgenden Kriterien überprüft wird:
- sind ausreichende Zugriffsrechte des angemeldeten Benutzers auf dem ersten Rechner vorhanden,
- sind benötigte Dateizugriffe auf dem Rechner vorhanden,
- Enthält die Szene dynamische Verlinkungen zu anderen Szenen,
- Enthält die Szene mindestens eine Lichtquelle,
- Enthält die Szene animierte Texturen.

**8.** Das Verfahren nach einem oder mehreren der vorhergehenden Ansprüche, wobei Meta-Informationen über die Projektdaten gesammelt werden, welche von der Rendervorrichtung entsprechend interpretiert werden können, wobei die Meta-Informationen eine oder mehrere der folgenden ist:
- Version und/oder Erweiterungen der Animationssoftware sowie des verwendeten Renderers und dessen Gamma-Werte,
- Zugrundeliegende Betriebssystemplattform des ersten Rechners,
- Einheiten, Bemaßung und deren Kontext,
- Verwendete Kameras.

**9.** Das Verfahren nach einem oder mehreren der vorhergehenden Ansprüche, wobei eine Überprüfung der Render-Einstellungen erfolgt, mit einem oder mehreren der folgenden Kriterien:
- Befindet sich die zu rendernde Auflösung außerhalb von gegeben Grenzen?
- Welche Frames sollen gerendert werden?
- Gibt es Abschnitte oder Sprünge?
- Werden Pre-Render-Scripts ausgeführt?
- Werden Post-Render-Effekte verwendet?
- Wurden Framebuffer definiert und/oder welche Einstellungen haben diese und ist mindestens einer für das Rendering aktiviert?
- Liegen ungültige Kamera-Einstellungen vor?
- Ist ein nicht-unterstützter Renderer aktiviert?
- In welchem Format soll das Ergebnis ausgegeben werden, wie soll es benannt werden und werden diese von der Rendervorrichtung unterstützt?

**10.** Das Verfahren nach einem oder mehreren der vorhergehenden Ansprüche, wobei eine Prüfung ob ein Einzelbild oder eine Animation gerendert werden soll erfolgt, wobei dies automatisch anhand der vom Benutzer eingestellten Frame-Anzahl erfolgt und wobei vorzugsweise bei lediglich einem Frame eine Benutzerabfrage generiert wird, die den Benutzer fragt, ob dieses ein Frame auf der Rendervorrichtung verteilt gerendert werden soll.

**11.** Das Verfahren nach einem oder mehreren der vorhergehenden Ansprüche, wobei Abhängigkeiten zu externen Dateien und Daten ermittelt werden, um zu prüfen, ob diese Dateien zum Export-Zeitpunkt vorhanden und lesbar sind, wobei diese Daten Texturen sind und/oder VRay Dateien, mental ray Dateien, Global Illumination files, photon maps, Irradiance maps, Final Gather maps, Ifl Dateien, Pointcaches, Simulationscaches, Particle Caches, Hair caches, usw. und/oder wobei der Dateiname und der Dateiinhalt auf Kompatibilität überprüft wird, um falls notwendig automatisch Änderungen am Dateinamen und/oder der Verlinkung und/oder dem Inhalt vorzunehmen.

**12.** Das Verfahren nach einem der drei vorhergehenden Ansprüche, wobei überprüft wird, ob eine der Dateien, durch den Anwender bereits im Vorfeld in Verbindung mit anderen Projektdaten an den zweiten Rechner übertragen wurden, falls dies der Fall ist, wird lediglich ein Verweis erzeugt, und die Daten nicht erneut übertragen.

**13.** Das Verfahren nach einem der drei vorhergehenden Ansprüche, wobei überprüft wird, ob eine Abhängigkeiten zu Plugins oder benutzerdefinierter Shadern in der Animationssoftware gegeben ist, um anhand des Regelwerks zu überprüfen, ob diese zulässig sind.

**14.** Erster Rechner, zur Bereitstellung von Projektdaten einer Animationssoftware für ein Verfahren nach einem der vorangehenden Ansprüche, umfassend:
- ein Ladegerät, ausgebildet und eingerichtet, um ein Plug-In (Farminizer Plugin) herunterzuladen und um dies in die Animationssoftware einzubinden, die auf diesem ersten Rechner installiert ist,
wobei das Plug-In ausgebildet und eingerichtet ist, um Informationen zu sammeln, die in Bezug stehen zu den Projektdaten und/oder der Rendervorrichtung;
- eine Übertragungsvorrichtung, die gesammelte Projektdaten und Informationen an den zweiten Rechner überträgt,
**gekennzeichnet durch**
- ein Gerät, ausgebildet und eingerichtet, zur Auswertung der gesammelten Informationen anhand eines Regelwerkes, wobei falls alle Regeln erfüllt wurden, die gesammelten Informationen und die Projektdaten für einen Versand vorbereitet werden, und wobei falls die Regeln nicht erfüllt worden sind, eine Meldung ausgegeben wird oder eine Anpassung der Projektdaten voll automatisch und/oder teilautomatisch mit interaktiver Führung durchgeführt wird, um dann die gesammelten Informationen und die Projektdaten für den Versand vorzubereiten.

**15.** Plug-In-Software (Farminizer Plugin), zur Übertragung von Projektdaten einer mehrdimensionalen Animation von einem ersten Rechner an einen über ein Netzwerk verbundenen zweiten Rechner, der mindestens eine Rendervorrichtung (Renderfarm) aufweist,
welche auf den ersten Rechner herunterladbar und in eine Animationssoftware, die auf dem ersten Rechner installiert ist, einbindbar ist,
und welche beim Ablaufen auf dem ersten Rechner folgende Schritte ausführt:
- Sammeln von Informationen auf dem ersten Rechner, die in Bezug stehen zu den Projektdaten und/oder der Rendervorrichtung;
- Übermitteln der gesammelten Informationen an den zweiten Rechner;
**dadurch gekennzeichnet, dass** sie ferner folgende Schritte ausführt:
- Bestimmen der von der Rendervorrichtung benötigten Informationen durch ein Regelwerk,
- Überprüfen der gesammelten Informationen anhand des Regelwerkes, wobei falls alle Regeln erfüllt wurden, die gesammelten Informationen und die Projektdaten an den zweiten Rechner übermittelt werden und wobei falls die Regeln nicht erfüllt worden sind, eine Meldung oder Anpassung der Projektdaten vollautomatisch und/oder teilautomatisch mit interaktiver Führung, um dann die gesammelten Informationen und die Projektdaten an den zweiten Rechner zu übermitteln, erfolgt;
so dass die Rendervorrichtung auf der Basis der Informationen und der Projektdaten automatisch einstellbar ist und das Rendern durchführbar ist.
